# EUROPÄISCHE PATENTSCHRIFT

(11) **EP 1 115 066 B1**
(45) Veröffentlichungstag und Bekanntmachung des Hinweises auf die Patenterteilung: **16.01.2008**
(21) Anmeldenummer: 00124023.3
(22) Anmeldetag: 04.11.2000
(51) Int. Cl.: G06F 13/40

(54) **Schaltungsanordnung mit einer Datenübertragungsvorrichtung**
Circuit system with data communication device
Système de circuit avec dispositif de communication de données

(30) Priorität: 21.12.1999 DE 19961727
(43) Veröffentlichungstag der Anmeldung: 11.07.2001
(73) Patentinhaber: Micronas GmbH, 79108 Freiburg i. Br. (DE)
(72) Erfinder: Czech, Martin, 79117 Freiburg (DE); Albert, Michael, 77955 Ettenheim (DE)
(74) Vertreter: Patentanwälte Westphal, Mussgnug & Partner

(56) Entgegenhaltungen:
- US-A- 4 551 821
- US-A- 4 651 036
- US-A- 5 808 490

## Beschreibung

Die vorliegende Erfindung betrifft eine Schaltungsanordnung mit zwei oder mehreren über eine Datenübertragungsvorrichtung kooperierenden Schaltungsteilen.

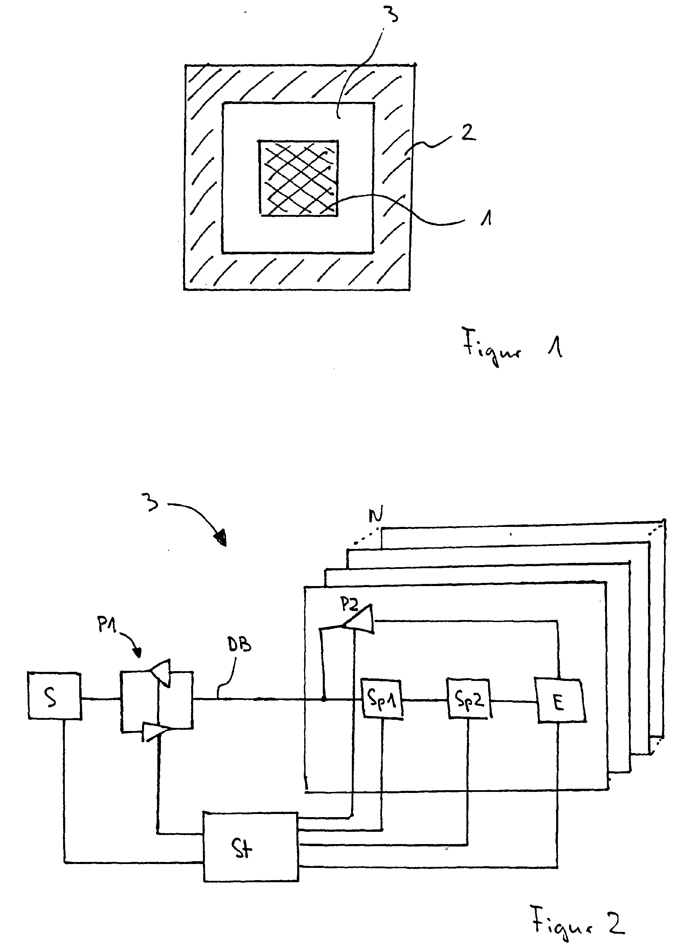

Derartige Schaltungsanordnungen weisen beispielsweise eine digitale und/oder eine analog/digitale integrierte Schaltung (sogenannte mixed-signal ICs) auf. Eine derartig aufgebaute Schaltungsanordnung ist schematisch in der Figur 1 dargestellt, wobei ein erster Schaltungsteil mit dem Bezugszeichen 1, ein zweiter Schaltungsteil mit dem Bezugszeichen 2 und Datenübertragungsvorrichtungen zwischen dem ersten Schaltungsteil 1 und dem zweiten Schaltungsteil 2 mit dem Bezugszeichen 3 bezeichnet sind.

Der erste Schaltungsteil bezeichnet hier die bereits erwähnte integrierte Schaltung, die in den zweiten Schaltungsteil eingebettet ist und über Kommunikationsbusse oder Verbindungsleitungen mit diesem verbunden ist. Der zweite Schaltungsteil kann Ausgangspads bzw. Bondpads aufweisen. Auf diese Bondpads können Ausgangsanschlüsse, die die Schnittstelle der Schaltungsanordnung und damit der integrierten Schaltung zur Außenwelt bilden, gebondet werden. Es wäre jedoch auch denkbar, wenn der zweite Schaltungsteil ebenfalls als integrierte Schaltung ausgebildet ist, in die die integrierte Schaltung des ersten Schaltungsteils eingebettet ist. Derartig aufgebaute Schaltungsanordnungen sind beispielsweise Vertreter der in der Fachwelt mit "Cell based systems" oder "Systems on silicon" oder "Circuits with embedded macros" bezeichneten integrierten Schaltungen. Bei integrierten Schaltungen dieser Art ist der erste Schaltungsteil (Cell bzw. Embedded Macro) häufig ein bereits existierender Funktionsblock, der "nur" in eine neue Umgebung (den zweiten Schaltungsteil) eingebettet wird.

Sowohl der erste als auch der zweite Schaltungsteil sind typischerweise durch ihre Funktionalität bzw. durch die verwendete Herstellungstechnologie, insbesondere beim Chip-Bonding, beim ESD-Schutz, etc., in der benötigten Chipfläche festgelegt, so daß eine weitere Chipflächenoptimierung ohne größere Eingriffe in die Funktionalität bzw. die Technologie nicht ohne weiteres möglich ist. Die Chipfläche wird jedoch häufig wesentlich durch die zwischen den Schaltungsteilen benötigen Datenübertragungsvorrichtung bestimmt. Insbesondere bei sehr komplexen Systemen, wie beispielsweise Signalprozessoren, Prozessoren, Mikrocontrollern, etc., kann diese mitunter sehr viel größer ausgebildet sein, als die integrierte Schaltung selbst.

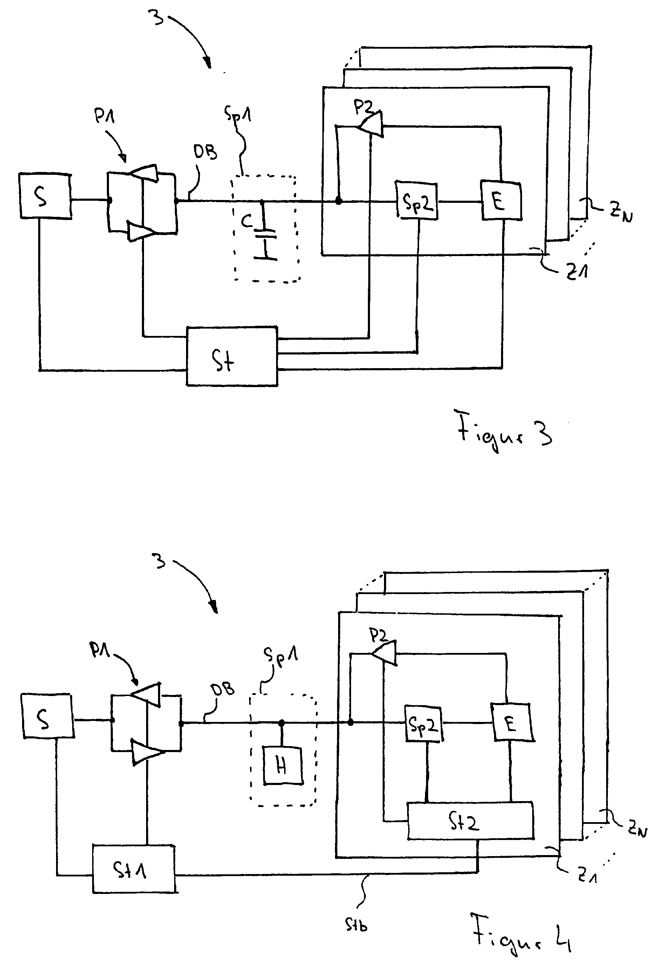

Eine typische Datenübertragungsvorrichtung 3 ist schematisch in Figur 2 dargestellt, wobei mit S ein Datensender mit E ein Datenempfänger und mit DB ein Datenbus bezeichnet ist. Der Datensender S sendet Daten über einen ersten Datenpuffer P1 und über den Datenbus DB an eine Vielzahl N von Datenempfängern E. Jedem der Datenempfänger E ist dabei ein zweiter Datenpuffer P2 und jeweils zwei Speichereinrichtungen Sp1, Sp2 zugeordnet. Die beiden dem Datenempfänger E zugeordneten Speichereinrichtungen Sp1, Sp2 sind hier in sogenannter Master-Slave-Struktur angeordnet, die bei einer Datenübertragung eine exakte Übergabe der Daten vom Datenbus DB zum Datenempfänger gestattet. Dies wird ermöglicht durch eine eigens dafür vorgesehene Ablaufsteuerung St, die die als Master agierende erste Speichereinrichtung Sp1 öffnet und erst dann wieder schließt, wenn diese aktualisierte, d.h. gültige Daten aufweist. In diesem Augenblick wird unter Steuerung der Ablaufsteuerung St die erste Speichereinrichtung Sp1 geschlossen und die als Slave agierende zweite Speichereinrichtung Sp2 geöffnet. So kann gewährleistet werden, daß empfängerseitig nur gültige, fehlerfreie Daten ausgelesen werden.

Allerdings wird für eine solche Datenübertragungsvorrichtung 3 der benötigte Flächenaufwand für jeweils zwei Speichereinrichtungen Sp1, Sp2 um so größer, je mehr Empfänger E an den Datenbus DB angeschlossen sind. Dadurch und durch layoutbedingte Maßnahmen kann es dazu kommen, daß der in Figur 1 mit 3 bezeichnete Bereich im Vergleich zur integrierten Schaltung 1 und zum Padbereich 2 unverhältnismäßig groß wird. Das Problem eines doppelten Flächenaufwandes für jeweils zwei Speicherelemente für jeden Empfänger E ist daher allein schon aus Kostengründen häufig nicht akzeptabel.

Der vorliegenden Erfindung liegt daher die Aufgabe zugrunde, eine gattungsgemäße Schaltungsanordnung bereitzustellen, die ein flächenoptimiertes Design der Datenübertragungsvorrichtung aufweist.

Erfindungsgemäß wird diese Aufgabe durch eine Schaltungsanordnung mit den Merkmalen des Patentanspruchs 1 gelöst. Demgemäß ist eine Schaltungsanordnung mit zwei oder mehreren über eine Datenübertragungsvorrichtung kooperierenden Schaltungsteilen vorgesehen,
- bei der ein Schaltungsteil als Datensender konfigurierbar ist und über einen Datenbus mit mindestens einem Datenempfänger des jeweils anderen Schaltungsteils verbunden ist,
- bei der der Datenbus einen ersten steuerbaren Datenpuffer und eine erste Speichereinrichtung aufweist,
- bei der jedem Datenempfänger jeweils ein zweiter steuerbarer Datenpuffer und eine zweite steuerbare Speichereinrichtung zugeordnet ist,
- wobei die als Master fungierende erste Speichereinrichtung und der oder die als Slave fungierenden zweiten Speichereinrichtungen unter Steuerung einer Ablaufsteuerung in Master-Slave-Konfiguration interagieren können.

Erfindungsgemäß wird das Problem des doppelten Flächenaufwandes für je zwei Speichereinrichtungen für jeweils einen Empfänger dadurch gelöst, daß der Datenbus selbst die Rolle einer dieser Speichereinrichtungen, nämlich der als Master fungierenden Speichereinrichtung, übernimmt. Hierzu ist lediglich eine leichte Änderung der Ablaufsteuerung erforderlich sowie eine einzige Speichereinrichtung auf dem Datenbus zu integrieren, die die Rolle der nicht mehr benötigten Speichereinrichtung für jeden Datenempfänger übernimmt. Durch die Einsparung einer jedem Empfänger zugeordneten Speichereinrichtung kann der in Figur 1 mit 3 bezeichnete Bereich in der Fläche optimiert werden, was eine deutliche Flächenreduzierung und damit eine Kostenreduktion zur Folge hat.

Diese Speichereinrichtungen können auf einfache Weise durch Kapazitäten und/oder durch Halteglieder realisiert werden. In einer besonders vorteilhaften Ausgestaltung wird das kapazitive Element durch die sich aus der Kapazität der Datenbusleitungen zu einer oder mehrerer Referenzleitungen ergebenden Kapazität realisiert. In diesem Fall ist die Funktionsweise der erfindungsgemäßen Datenübertragungsvorrichtung auch dann noch gewährleistet, wenn kein eigens dafür vorgesehenes kapazitives Element C vorgesehen ist.

Typischerweise ist eine einzige Ablaufsteuerung zur Steuerung für alle steuerbaren Datenpuffer und Speichereinrichtungen vorgesehen. Die Ablaufsteuerung kann jedoch vorteilhafterweise auch auf zwei Schaltungsteile aufgeteilt werden, wenn dies eine weitere Flächenersparnis und/oder eine Vergrößerung der Arbeitsgeschwindigkeit zur Folge hat.

Die Erfindung eignet sich insbesondere bei sehr komplexen integrierten Schaltungen, wie beispielsweise Mikroprozessoren, Mikrocontroller und Signalprozessoren.

Weitere vorteilhafte Ausgestaltungen und Weiterbildungen der Erfindung sind den Unteransprüchen, der folgenden Beschreibung und den Figuren entnehmbar.

Die Erfindung wird nachfolgend anhand der in den Figuren der Zeichnung angegebenen Ausführungsbeispiele näher erläutert. Es zeigt dabei:
- Figur 1: schematisch den Aufbau einer gattungsgemäßen Schaltungsanordnung;
- Figur 2: schematisch den Aufbau einer bekannten Datenübertragungsvorrichtung zwischen einem als Datensender agierenden ersten Schaltungsteil und mindestens einem als Datenempfänger fungierenden zweiten Schaltungsteil;
- Figur 3: ein erstes Ausführungsbeispiel einer erfindungsgemäßen Datenübertragungsvorrichtung;
- Figur 4: ein zweites Ausführungsbeispiel einer erfindungsgemäße Datenübertragungsvorrichtung.

In allen Figuren der Zeichnung sind gleiche oder funktionsgleiche Elemente mit gleichen Bezugszeichen versehen worden.

Figur 3 zeigt schematisch eine Datenübertragungsvorrichtung 3 zwischen einem als Datensender S fungierenden ersten Schaltungsteil und mindestens einem als Datenempfänger E fungierenden zweiten Schaltungsteil. Die Datenübertragungsvorrichtung 3 weist einen Datenbus DB zwischen Datensender S und Datenempfänger E auf. In den Datenbus DB ist senderseitig ein erster Datenpuffer P1 angeordnet. Empfängerseitig sind eine Vielzahl N von Empfängerzellen Z₁..Z_{N} vorgesehen. Jede Empfängerzelle Z₁..Z_{N} weist jeweils einen Datenempfänger E auf, dem jeweils eine zweite Speichereinrichtung Sp2 und ein zweiter Datenpuffer P2 vorgeschaltet ist. Die Datenpuffer P1, P2 sind steuerbar und können in bekannter Weise mittels Inverter realisiert sein. Die zweite Speichereinrichtung Sp2 ist ebenfalls steuerbar und kann als gängiges Flip-Flop, Latch, etc., ausgebildet sein.

Zur Steuerung der Datenübertragung zwischen Datensender S und Datenempfänger E ist eine Ablaufsteuerung St vorgesehen. Die Ablaufsteuerung St ist zu diesem Zwecke über Steuerleitungen mit dem Datensender S, dem Datenempfänger E, den Datenpuffern P1, P2 und der zweiten Speichereinrichtung Sp2 verbunden.

Erfindungsgemäß weist die Datenübertragungsvorrichtung 3 eine im Datenbus DB angeordnete erste Speichereinrichtung Sp1 auf. Die erste Speichereinrichtung Sp1 ist dabei derart angeordnet, daß sie jeder Empfängerzelle Z₁..Z_{N} eines Datenempfängers E und somit der zweiten Speichereinrichtung Sp2 vorgeschaltet ist. In Figur 3 ist die erste Speichereinrichtung Sp1 als kapazitives Element C, das zwischen dem Datenbus DB und einem Referenzpotential angeschlossen ist, ausgebildet. Figur 4 zeigt ein zweites Ausführungsbeispiel der erfindungsgemäßen Datenübertragungsvorrichtung 3, bei der die erste Speichereinrichtung Sp1 als Halteglied H, die an den Datenbus DB angeschlossen ist, ausgebildet ist.

Nachfolgend wird die Funktionsweise der in den Figuren 3 und 4 dargestellten Datenübertragungsvorrichtungen 3 näher erläutert:

Der Datensender S sendet Daten über den Datenpuffer P1 und den Datenbus DB. Auf dem Datenbus DB werden die Daten entweder dynamisch mittels der als kapazitives Element C ausgebildeten ersten Speichereinrichtung Sp1 (siehe Figur 3) oder statisch mittels eines zusätzlichen Haltegliedes H (siehe Figur 4) für eine gewisse Zeit gehalten. Dieses Halten bzw. Speichern erfolgt dadurch, daß der erste Datenpuffer P1 durch ein Steuersignal der Ablaufsteuerung St in einen hochohmigen Zustand gesteuert wird. Anschließend veranlaßt die Ablaufsteuerung St über ein Steuersignal, daß die zweite Speichereinrichtung Sp2 geöffnet wird, wodurch die gewünschten gültigen Daten, die auf dem Datenbus DB gespeichert sind, in die jeweilige zweite Speichereinrichtung Sp2 übertragen werden. Anschließend wird die zweite Speichereinrichtung Sp2 wieder verriegelt. Der Datenbus DB kann dann beliebige Zustände annehmen, d.h. er kann beispielsweise wieder Daten für den nächsten Datentransfer aufnehmen.

Das kapazitive Element C in Figur 3 kann typischerweise durch eine integrierte oder diskret ausgebildete Kapazität realisiert. Besonders vorteilhaft ist es jedoch, wenn das kapazitive Element C in Figur 3 durch die sich aus der Kapazität der Datenbusleitungen zu einer oder mehrerer Referenzleitungen ergebenden Kapazität realisiert wird. In diesem Fall ist die Funktionsweise der erfindungsgemäßen Datenübertragungsvorrichtung auch dann gewährleistet, wenn kein eigens dafür vorgesehenes kapazitives Element C vorgesehen ist. Es ist hier lediglich eine geeignete Veränderung der Ablaufsteuerung St, insbesondere der Ansteuerung des Datenpuffers P1, erforderlich.

Die Ablaufsteuerung St kann vorteilhafterweise auch auf zwei Schaltungsteile St1, St2 aufgeteilt werden, wenn dies eine weitere Flächenersparnis und/oder eine Vergrößerung der Arbeitsgeschwindigkeit zur Folge hat. In diesem Fall, der in Figur 4 dargestellt ist, ist ein erster Teil der Ablaufsteuerung St1 dem Datensender S zugeordnet und ein zweiter Teil der Ablaufsteuerung St2 jedem der Datenempfänger E zugeordnet. Hierzu ist jeweils ein zusätzlicher Steuerbus Stb zwischen den Ablaufsteuerungen St1, St2, der eine Kommunikation zwischen diesen ermöglicht, erforderlich.

Die erfindungsgemäße Schaltungsanordnung ist auf alle möglichen Technologien anwendbar. Besonders vorteilhaft ist die Erfindung, wenn die Schaltungsanordnung als integrierte Schaltung vorliegt. Es wäre jedoch auch eine diskrete Realisierung, über kurze oder sehr lange Distanzen, denkbar. Prinzipiell ist die erfindungsgemäße Datenübertragungsvorrichtung für alle digitalen, analogen, Mixed-Signal- (d.h. analog/digital) Schaltungsanordnungen anwendbar. Jedoch ist die Erfindung nicht ausschließlich auf elektrische Schaltungsanordnungen eingeschränkt, sondern auch auf pneumatisch ausgebildete Schaltungsanordnungen erweiterbar. Für den Fall einer Übertragungsvorrichtung in der Pneumatik sind beispielsweise die Datenpuffer als Ventile, die Speichereinrichtungen als Druckbehälter und die Datenbusse als übliche Leitungen zu realisieren.

Der besondere Vorteil der Erfindung liegt in der großen Flächenersparnis und somit der Materialersparnis. Hierfür ist lediglich eine leichte Änderung in der Ablaufsteuerung sowie die Hinzunahme einer Speichereinrichtung für alle zugeordneten Empfänger, die sehr einfach in Form eines kapazitiven Elementes oder eines einfachen Haltegliedes realisiert werden können, erforderlich.

### Bezugszeichenliste

- 1: erster Schaltungsteil; integrierte Schaltung
- 2: zweiter Schaltungsteil; Peripheriebereich
- 3: Datenübertragungsvorrichtung; Kommunikationsbus
- C: kapazitives Element
- DB: Datenbus
- E: Datenempfänger
- H: Halteglied
- P1, P2: erster/zweiter Datenpuffer
- s: Datensender
- Sp1, Sp2: erste/zweite Speichereinrichtung
- ST, St1, St2: Ablaufsteuerung
- Stb: Steuerbus
- Z1 - ZN: Empfängerzellen

## Patentansprüche

1. Schaltungsanordnung mit zwei oder mehreren über eine Datenübertragungsvorrichtung (3) kooperierenden Schaltungsteilen (1, 2),
- bei dem ein Schaltungsteil (1, 2) als Datensender (S) konfigurierbar ist und über einen Datenbus (DB) mit mindestens einem Datenempfänger (E) des jeweils anderen Schaltungsteils (1, 2) verbunden ist,
- bei dem der Datenbus (DB) einen ersten steuerbaren Datenpuffer (P1) und eine erste Speichereinrichtung (Sp1) aufweist,
- bei dem jedem Datenempfänger (E) jeweils ein zweiter steuerbarer Datenpuffer (P2) und eine zweite steuerbare Speichereinrichtung (Sp2) zugeordnet ist,
- wobei die als Master fungierende erste Speichereinrichtung (Sp1) und der oder die als Slave fungierenden zweiten Speichereinrichtungen (Sp2) unter Steuerung einer Ablaufsteuerung (St) in Master-Slave-Konfiguration interagieren können.

2. Schaltungsanordnung nach Anspruch 1,
**dadurch gekennzeichnet,**
**daß** die erste Speichereinrichtung (Sp1) als kapazitives Element (C) ausgebildet ist, dessen einer Anschluß mit dem Datenbus (DB) und dessen anderer Anschluß mit einem Bezugspotential verbunden ist.

3. Schaltungsanordnung nach Anspruch 2,
**dadurch gekennzeichnet,**
**daß** sich die Kapazität des kapazitiven Elements (C) aus der Leitungskapazität des Datenbusses (DB) bezüglich einer oder mehrerer Referenzleitungen ergibt.

4. Schaltungsanordnung nach Anspruch 1,
**dadurch gekennzeichnet,**
**daß** die erste Speichereinrichtung (Sp1) als Halteglied (H) ausgebildet ist.

5. Schaltungsanordnung nach einem der vorstehenden Ansprüche,
**dadurch gekennzeichnet,**
**daß** eine einzige Ablaufsteuerung (ST) vorgesehen ist, die dazu ausgelegt ist, sämtliche dem Datensender (S) und dem oder den Datenempfängern (E) zugeordnete Datenpuffer (P1, P2) und zweite Speichereinrichtungen (Sp2) zu steuern.

6. Schaltungsanordnung nach einem der Ansprüche 1 bis 4,
**dadurch gekennzeichnet,**
**daß** die Ablaufsteuerung (St1, St2) einen ersten, dem Datensender (S) zugeordneten Steuerteil (St1) zur Steuerung des ersten Datenpuffers (P1) aufweist sowie einen jedem der Datenempfänger (E) zugeordneten, zweiten Steueranteil (St2) aufweist, die jeweils die entsprechenden zweiten Datenpuffer (P1) und zweiten Speichereinrichtungen (Sp2) steuern, wobei ein Steuerbus (STB) zwischen erstem und zweitem Steuerteil (St1, St2) zur Datenkommunikation vorgesehen ist.

7. Schaltungsanordnung nach einem der vorstehenden Ansprüche,
**dadurch gekennzeichnet,**
**daß** mindestens einer der Schaltungsteile (1, 2) Bestandteil mindestens einer integrierten Schaltung (1) ist.

8. Schaltungsanordnung nach Anspruch 7,
**dadurch gekennzeichnet,**
**daß** mindestens einer der Schaltungsteile (1, 2) Bestandteil eines Peripheriebereichs (2) der integrierten Schaltung (1) zur Aufnahme der Anschlußpads der Ein/Ausgabeanschlüsse ist.

9. Schaltungsanordnung nach einem der vorstehenden Ansprüche,
**dadurch gekennzeichnet,**
**daß** die Schaltungsanordnung mindestens einen Mikroprozessor und/oder Mikrocontroller und/oder mindestens einen Signalprozessor mit einer vorgegebenen Menge an Zuständen aufweist.

## Claims

1. A circuit configuration having two or more circuit sections (1, 2) that cooperate via a data transmission device (3),
- in which one circuit section (1, 2) can be configured as a data transmitter (S) and is connected via a data bus (DB) to at least one data receiver (E) of the respective other circuit section (1, 2),
- in which the data bus (DB) comprises a first controllable data buffer (P1) and a first memory device (Sp1),
- in which in each case a second controllable data buffer (P2) and a second controllable memory device (Sp2) are assigned to each data receiver (E),
- where the first memory device (Sp1) acting as master and the second memory device or devices (Sp2) acting as slave/slaves can interact in master-slave configuration under the control of a sequence controller (St).

2. A circuit configuration according to Claim 1,
**characterised in that** the first memory device (Sp1) is designed as a capacitive element (C), in which one terminal is connected to the data bus (DB) and in which the other terminal is connected to a reference potential.

3. A circuit configuration according to Claim 1,
**characterised in that** the capacitance of the capacitive element (C) is provided by the line capacitance of the data bus (DB) with respect to one or more reference lines.

4. A circuit configuration according to Claim 1,
**characterised in that** the first memory device (Sp1) is designed as a holding element (H).

5. A circuit configuration according to one of the preceding Claims,
**characterised in that** a single sequence controller (ST)) is provided, which is designed to control all data buffers (P1, P2) that are assigned to the data transmitter (S) and to the data receiver or receivers (E) and second memory devices (Sp2).

6. A circuit configuration according to one of Claims 1 to 4,
**characterised in that** the sequence controller (St1, St2) comprises a first control section (St1), assigned to the data transmitter (S), to control the first data buffer (P1) and a second control section (St2), assigned to each of the data receivers (E), which in each case control the corresponding second data buffers (P1) and second memory devices (Sp2), a control bus (STB) being provided between the first control section and the second control section (St1, St2) for data communication.

7. A circuit configuration according to one of the preceding Claims,
**characterised in that** at least one of the circuit sections (1, 2) is a component of at least one integrated circuit (1).

8. A circuit configuration according to Claim 7,
**characterised in that** at least one of the circuit sections (1, 2) is a component of a peripheral region (2) of the integrated circuit (1) for housing the connection pads of the input/output terminals.

9. A circuit configuration according to one of the preceding Claims,
**characterised in that** the circuit configuration comprises at least one microprocessor and/or microcontroller and/or at least one signal processor with a predetermined number of states.

## Revendications

1. Circuit comportant deux ou plusieurs parties de circuit (1, 2) coopérant par un dispositif de transmission de données (3), dans lequel :
- une partie de circuit (1, 2) est configurable comme émetteur de données (S) en étant reliée par un bus de données (DB) à au moins un récepteur de données (E) de l'autre partie respective de circuit (1, 2),
- le bus de données (DB) comporte un premier tampon de données (P1), commandé et une première installation de mémoire (Sp1),
- à chaque récepteur de données (E) est associé second tampon de données commandé (P2), respectif et une seconde installation de mémoire (So2) commandée,
- la première installation de mémoire (Sp1) fonctionnant comme maître et la ou les secondes installations de mémoire (Sp2) fonctionnant comme esclave, interagissent dans une configuration maître-esclave sous la commande d'une commande de déroulement (St).

2. Circuit selon la revendication 1,
**caractérisé en ce que**
la première installation de mémoire (Sp1) est un élément capacitif (C) dont une borne est reliée au bus de données (DB) et l'autre borne est reliée à un potentiel de référence.

3. Circuit selon la revendication 2,
**caractérisé en ce que**
la capacité de l'élément capacitif (C) résulte de la capacité de ligne du bus de données (DB) par rapport à une ou plusieurs lignes de référence.

4. Circuit selon la revendication 1,
**caractérisé en ce que**
la première installation de mémoire (Sp1) est réalisée sous la forme d'un élément de retenu (H).

5. Circuit selon l'une quelconque des revendications précédentes,
**caractérisé par**
une seule commande de déroulement (St) conçue pour commander tous les tampons de données (P1, P2) associés à l'émetteur de données (S) et à un ou des récepteurs de données (E) et des secondes installations de mémoire (Sp2).

6. Circuit selon l'une quelconque des revendications 1 à 4,
**caractérisé en ce que**
la commande de déroulement (St1, St2) comprend une première partie de commande (St1) associée à l'émetteur de données (S) pour commander le premier tampon de données (P1) ainsi qu'une seconde partie de commande (St2) associée à chacun des récepteur de données (E), pour commander respectivement les seconds tampons de données (P1) et les secondes installations de mémoire (Sp2), un bus de commande (STB) étant prévu entre une première et une seconde partie de commande (St1, St2) pour la communication des données.

7. Circuit selon l'une quelconque des revendications précédentes,
**caractérisé en ce qu'**
au moins l'une des parties de circuit (1, 2) appartient au moins à un circuit intégré (1).

8. Circuit selon la revendication 7,
**caractérisé en ce qu'**
au moins l'une des parties de circuit (1, 2) appartient à une zone périphérique (2) du circuit intégré (1) pour recevoir le chemin de branchement du branchement d'entrée/sortie.

9. Circuit selon l'une quelconque des revendications précédentes,
**caractérisé en ce qu'**
il comporte au moins un microprocesseur et/ou un microcontrôleur et/ou au moins un processeur de signal avec une quantité prédéfinie d'état.
